# EUROPÄISCHE PATENTSCHRIFT

(11) **EP 4 311 821 B1**
(45) Veröffentlichungstag und Bekanntmachung des Hinweises auf die Patenterteilung: **12.02.2025**
(21) Anmeldenummer: 23000104.2
(22) Anmeldetag: 26.07.2023
(51) Int. Cl.: C05F 17/929

(54) **KOMPOSTER UND VERFAHREN ZUR UMWANDLUNG VON ORGANISCHEM MATERIAL IN KOMPOST IN EINEM KOMPOSTER**
COMPOSTER AND METHOD FOR CONVERTING ORGANIC MATERIAL INTO COMPOST IN A COMPOSTER
COMPOSTEUR ET PROCÉDÉ DE CONVERSION DE MATIÈRE ORGANIQUE EN COMPOST DANS UN COMPOSTEUR

(30) Priorität: 28.07.2022 ES 202231261 U; 17.05.2023 DE 202023001095 U
(43) Veröffentlichungstag der Anmeldung: 31.01.2024
(73) Patentinhaber: Ecompost Industries, Sociedad Limitada, 08227 Terrassa (Barcelona) (ES)
(72) Erfinder: Martínez Lopez, Jesus, 08221 Terrasa, Barcelona (ES); De Rueda, Alberto Angel, 08233 Vacarisses, Barcelona (ES)
(74) Vertreter: Bienert, Harald

(56) Entgegenhaltungen:
- WO-A1-01/68281
- DE-A1- 3 807 017
- FR-A1- 2 579 908

## Beschreibung

Die vorliegende Erfindung betrifft einen Komposter zur Umwandlung von organischem Material in Kompost.

Die vorliegende Erfindung betrifft außerdem ein Verfahren zur Umwandlung von organischem Material in Kompost in einem Komposter, insbesondere mit einem obigen Komposter.

Bei der Kompostierung wird organisches Material einem natürlichen Umwandlungsprozess unterzogen, bis ein organischer Kompost oder Dünger entsteht, der die Bodenstruktur verbessert, indem er Huminstoffe liefert, die die durch anthropogene Aktivitäten verursachten Verluste ausgleichen können.

Dieser Prozess findet auf natürliche Weise in Laubwaldböden mit einem hohen Anteil an organischem Material statt und führt zur Bildung von "Kompost-Humus".

Aus ökologischer und industrieller Sicht besteht der Hauptvorteil der Kompostierung darin, dass sie es ermöglicht, viele Arten biologisch abbaubarer organischer Abfälle sicher zu beseitigen und als Input für die landwirtschaftliche Produktion wiederzuverwerten, wodurch Umweltverschmutzungsprobleme vermieden werden, die durch die Entsorgung oder Deponierung dieser Abfälle entstehen würden.

Sie ermöglicht es, organische Stoffe einer zweiten Verwendung zuzuführen, sie wiederzugewinnen und zu recyceln, wodurch die Menge an festen Siedlungsabfällen, die auf Deponien und in Kläranlagen entsorgt werden müssen, verringert wird, wodurch Probleme der Bodenverschmutzung oder die Emission schädlicher Gase in die Atmosphäre vermieden werden.

Seine Verwendung fördert die Produktivität des Bodens, ohne dass andere chemischsynthetische Produkte eingesetzt werden müssen, und hat somit eine Reihe von Effekten mit sehr günstigen agro-biologischen Auswirkungen.

Die zugeführte organische Substanz trägt zur Verbesserung der Stabilität der Struktur der landwirtschaftlichen Bodenaggregate bei, erhöht die Wasser- und

Gasdurchlässigkeit und trägt durch die Bildung von Aggregaten zur Steigerung der Wasserrückhaltekapazität des Bodens bei.

Die Verwendung von Kompost trägt zur Verbesserung der biologischen Aktivität des Bodens bei, da die gelieferte organische Substanz eine Energie- und Nahrungsquelle für die im Boden vorhandenen Mikroorganismen darstellt.

Die Verwendung von Kompost erfordert einen geringeren Flächenverbrauch, geringere Auswirkungen auf die Landschaft, den Boden und das Grundwasser, da das Volumen der zu deponierenden Abfälle reduziert wird.

Darüber hinaus kann bei der Herstellung des Komposts entstehendes Methan aufgefangen und energetisch genutzt werden. Dadurch kann einer Anreicherung von Treibhausgasen in der Atmosphäre entgegengewirkt werden Zwar sind im Stand der Technik mehrere Ausführungsformen von Kompostern bekannt.

Allerdings sind diese Komposter nicht effizient und/oder haben einen komplizierten Aufbau. Auch die im Stand der Technik verwendeten Verfahren zur Umwandlung von organischem Material in Kompost in einem Komposter sind wenig effizient und aufwändig in der Durchführung.

In diesem Zusammenhang ist beispielsweise aus dem Dokument FR 2 579 908 A1 ein Verfahren zur Behandlung von Hausmüll bekannt, bei dem der gesammelte Rohmüll einer groben Zerkleinerung unterzogen wird, dann einer teilweisen Trocknung, die ihn in ein nicht fermentierbares.Produkt mit geringer Dichte umwandelt, und schließlich in Form von kompakten Blöcken verdichtet wird, die eine geringe Austauschfläche mit der Umgebungsluft aufweisen und für einen Zeitraum von beispielsweise bis zu sechs Monaten gelagert werden können.

Aus dem Dokument WO 01/68281 A1 ist eine Müllverarbeitungsvorrichtung bekannt, die eine Müllzufuhreinrichtung, eine zylindrische Trommel, in der Späne gelagert sind, die Mikroorganismen zur Zersetzung und Löschbehandlung von Müll tragen, und eine Drehantriebseinrichtung zum Drehen der zylindrischen Trommel umfasst. An der Innenfläche der zylindrischen Trommel sind Rührflügel angebracht, um die Späne zu rühren, die mit einer Heizung zum Erwärmen der Späne versehen sind.

Das Dokument DE3807017 A1 offenbart eine Vorrichtung und ein Verfahren zur Herstellung eines Umwandlungsproduktes aus Haufwerk von Pflanzenabfällen, insbesondere von aufgesammeltem Laub, bei dem das Haufwerk durch mechanische Zerkleinerung mittels eines konischen Schneckförderers in Partikel zerlegt wird und im Anschluß an die Zerkleinerung die Partikel zerdrückt und gequetscht werden.

Ausgehend von dem oben genannten Stand der Technik liegt der Erfindung somit die Aufgabe zugrunde, einen Komposter anzugeben, der effizient ist und/oder einen einfachen Aufbau aufweist. Außerdem liegt der Erfindung die Aufgabe zugrunde, ein Verfahren zur Umwandlung von organischem Material in Kompost in einem Komposter anzugeben, das effizient und auf einfache Weise durchgeführt werden kann.

Die Lösung der Aufgabe erfolgt erfindungsgemäß durch die Merkmale des unabhängigen Anspruchs. Vorteilhafte Ausgestaltungen der Erfindung sind in den davon abhängigen Unteransprüchen angegeben.

Erfindungsgemäß ist somit ein Komposter zur Umwandlung von organischem Material in Kompost angegeben, umfassend eine Primäreinheit, die das organische Material aufnimmt und komprimiert und den Druck des organischen Materials erhöht, um es in Vorkompost umzuwandeln, mit einer Primärwelle, die innerhalb eines Primärgehäuses angeordnet ist, wobei die Primärwelle wiederum einen Bereich mit einer Schneckenschraube umfasst, wobei sich die Spirale der Schneckenschraube zu einem ihrer Enden hin in ihrer radialen Länge verkürzt, und einem Verdickungsbereich, in dem der Durchmesser der Primärwelle in Richtung des Innendurchmessers des Primärgehäuses zunimmt, insbesondere als konisch zulaufender Bereich, und eine Sekundäreinheit, die den Vorkompost von der Primäreinheit erhält und den Vorkompost zerkleinert und entklumpt, umfassend Mittel zum Zerkleinern und Entklumpen des Vorkomposts, um ihn in Kompost zu verwandeln, die innerhalb eines Sekundärgehäuses angeordnet sind.

Erfindungsgemäß ist außerdem ein Verfahren zur Umwandlung von organischem Material in Kompost in einem Komposter, insbesondere mit einem obigen Komposter, angegeben, umfassend die Schritte Aufnehmen des organischen Materials in einer Primäreinheit des Komposters, Komprimieren und Erhöhen des Drucks des organischen Materials in der Primäreinheit, um es in Vorkompost umzuwandeln, und Zerkleinern und Entklumpen des Vorkomposts in einer Sekundäreinheit des Komposters, die den Vorkompost von der Primäreinheit erhält, um-ihn in Kompost zu verwandeln.

Grundidee der vorliegenden Erfindung ist es also, einen einfachen Komposter bereitzustellen, der mit der Primäreinheit und der Sekundäreinheit einen einfachen Aufbau aufweist. Gleichzeitig bewirkt die Primäreinheit eine effiziente Herstellung des Vorkomposts aus dem organischen Material, und die Sekundäreinheit bewirkt eine effiziente Herstellung des Komposts aus dem Vorkompost. Die zwei Einheiten können für die jeweiligen Anforderungen zur Herstellung des Vorkomposts und des Komposts optimiert werden. In der Praxis hat sich dabei herausgestellt, dass die Primäreinheit mit der Primärwelle und dem Bereich mit einer Schneckenschraube sowie dem Verdickungsbereich sehr effizient arbeitet, um den Vorkompost zur weiteren Verarbeitung durch die Sekundäreinheit bereitzustellen.

Der Komposter dient der Umwandlung des organischen Materials in Kompost. Der Komposter führt dabei eine Verarbeitung durch, die typischerweise einer weiteren biologischen bzw. mikrobioloschen Zersetzung des Komposts vorausgeht. Dies erfordert jedoch keine weitere Verarbeitung, so dass der Komposter die erforderlichen maschinellen Schritte zur Herstellung des Kompostes durchführt.

Das organische Material ist typischerweise für das Kompostieren geeignetes Material, welches abhängig von seiner konkreten Zusammensetzung einen unterschiedlichen Feuchtigkeitsgehalt aufweisen kann. Solch organisches Material wird auch in üblichen Kompostern verwendet.

Die Primäreinheit nimmt das organische Material auf. Das organische Material wird dabei durch die Primäreinheit entlang der Primärwelle gefördert. Das organische Material tritt in die Primäreinheit im Bereich mit der Schneckenschraube ein. Dies definiert eine Einlassseite der Primäreinheit. Das organische Material wird mit der Schneckenschraube in Richtung zu dem Verdickungsbereich gefördert, d.h. in Richtung zu der Zunahme des Durchmessers der Primärwelle. Während des Transports wird das organische Material komprimiert und dadurch der Druck des organischen Materials erhöht, so dass beispielsweise enthaltene Feuchtigkeit austreten kann.

Am Ende des Verdickungsbereichs weist dieser typischerweise seine größte radiale Ausdehnung auf, wobei zwischen dem Verdickungsbereich an der Stelle seiner größten radialen Ausdehnung und dem Primärgehäuse ein Spalt verbleibt, durch den der Vorkompost aus der Primäreinheit austreten kann. Das Ende des Verdickungsbereichs definiert typischerweise eine Auslassseite der Primäreinheit. Dadurch wird sichergestellt, dass der Vorkompost keine übermäßig großen Stücke enthält, da diese durch den Spalt zurückgehalten werden. In dem Verdickungsbereich vergrößert sich der Durchmesser der Primärwelle in Richtung des Innendurchmessers des Primärgehäuses. Dies kann auch erreicht werden, indem auf der Primärwelle ein entsprechender Aufsatz montiert wird. Der Verdickungsbereich ist insbesondere als konisch zulaufender Bereich ausgeführt, d.h. als Kegel oder Kegelabschnitt mit einer gleichmäßigen Vergrößerung des Durchmessers. Die Vergrößerung des Durchmessers erfolgt in Förderrichtung des organischen Materials, d.h. in Richtung von der Einlassseite zu der Auslassseite der Primäreinheit.

Die Rotation der Primärwelle bewirkt die Rotation der Schneckenschraube und des Verdickungsbereichs und damit den Transport des organischen Materials und dessen Umwandlung in den Vorkompost. Das Verkürzen der radialen Länge der Spirale der Schneckenschraube erfolgt von der Einlassseite der Primäreinheit in Richtung zu der Auslassseite. Durch das Verkürzen der radialen Länge der Spirale der Schneckenschraube kann das organische Material zuverlässig erfasst, gefördert und komprimiert werden.

Die Sekundäreinheit erhält den Vorkompost von der Primäreinheit und zerkleinert und entklumpt ihn. Dazu umfasst die Sekundäreinheit entsprechende Mittel zum Zerkleinern und Entklumpen des Vorkomposts, die innerhalb eines Sekundärgehäuses angeordnet sind. Der Vorkompost wird vorzugsweise automatisch der Sekundäreinheit zugeführt, wobei die Primäreinheit und die Sekundäreinheit getrennte Einheiten in dem Komposter sein können, oder alternativ als integrale Einheit bereitgestellt werden können. Von der Sekundäreinheit wird der Kompost endseitig ausgelassen.

Das Verfahren zur Umwandlung von organischem Material in Kompost in dem Komposter kann unter Verwendung des Komposters auf einfache Weise in wenigen Schritten effizient durchgeführt werden. Dies gilt insbesondere für die Verwendung des obigen Komposters. In dem ersten Schritt wird das organische Material der Primäreinheit des Komposters zugeführt und von dieser aufgenommen. Im Anschluss wird das organische Material in einem zweiten Schritt komprimiert und der Druck des organischen Materials wird erhöht, um es in Vorkompost umzuwandeln. Der zweite Schritt erfolgt in der Primäreinheit. In einem dritten Schritt wird der Vorkomposts in einer Sekundäreinheit des Komposters, die den Vorkompost von der Primäreinheit erhält, zerkleinert und entklumpt, um den Vorkompost in Kompost zu verwandeln.

In vorteilhafter Ausgestaltung der Erfindung bilden der Bereich mit der Schneckenschraube und der Verdickungsbereich zwei getrennte Bereiche entlang der Primärwelle, oder der Bereich mit der Schneckenschraube umfasst zumindest teilweise den Verdickungsbereich, oder der Verdickungsbereich umfasst zumindest teilweise den Bereich mit der Schneckenschraube. Diese verschiedenen Ausgestaltungen der Schneckenschraube und des Verdickungsbereichs ermöglichen die Bereitstellung der Primäreinheit mit unterschiedlichen Vorteilen. Die separate Bereitstellung von Schneckenschraube und Verdickungsbereich ermöglicht deren individuelle Optimierung. Darüber hinaus können weitere Vorteile erzielt werden, wie nachstehend ausgeführt ist. Eine zumindest teilweise Überlappung von Schneckenschraube und Verdickungsbereich auf eine der angegebenen Weisen ermöglicht die Bereitstellung der Primäreinheit mit kompakten Abmessungen.

In vorteilhafter Ausgestaltung der Erfindung bilden der Bereich mit der Schneckenschraube und der Verdickungsbereich zwei getrennte Bereiche entlang der Primärwelle, und ein Abstand zwischen dem Bereich mit der Schneckenschraube und dem Verdickungsbereich entlang der Primärwelle ist einstellbar. Die Einstellung des Abstands der beiden Bereiche ermöglicht eine Anpassung der Erzeugung des Vorkomposts mit der Primäreinheit, beispielsweise abhängig von Eigenschaften des organischen Materials. Entsprechend kann ein homogener Vorkompost hergestellt werden. Auch kann eine aufnehmbare Menge des organischen Materials variiert werden. Der Abstand kann abhängig von der Ausführung des Komposters zwischen Null und einem maximalen Abstand eingestellt werden. Beispielsweise kann der Abstand eingestellt werden, indem einer der Bereiche verschiebbar auf der Primärwelle gehalten ist. Alternativ können auch beide Bereiche verschiebbar auf der Primärwelle gehalten sein, was eine erhöhte Flexibilität ermöglicht. Das Einstellen kann beispielsweise eine mechanische Einstellung sein, indem der entsprechende Bereich mit einem Gewinde an der Primärwelle verstellbar gehalten ist und im Stillstand, insbesondere vor dem Betrieb des Komposters, der Abstand eingestellt wird. Alternativ kann der entsprechende Bereich im Betrieb verstellt werden, beispielsweise mit einer hydraulischen Verstellung.

In vorteilhafter Ausgestaltung der Erfindung verkürzt sich die Spirale der Schneckenschraube zu einem ihrer Enden hin in ihrer radialen Länge graduell, und/oder die Spirale der Schneckenschraube verkürzt sich zu einem ihrer Enden hin in ihrer radialen Länge, bis sie verschwindet und nur noch die Primärwelle übrigbleibt. Sowohl das graduelle Verkürzen der Spirale der Schneckenschraube wie auch das Verkürzen der Spirale der Schneckenschraube, bis sie verschwindet und nur noch die Primärwelle übrigbleibt, haben sich als vorteilhaft herausgestellt, um das organische Material durch die Primäreinheit zu fördern und dabei das organische Material zu komprimieren und den Druck des organischen Materials zu erhöhen. Besonders bevorzugt ist eine kombinierte Ausgestaltung der Spirale, die sich graduell zu einem ihrer Enden hin in ihrer radialen Länge verkürzt, bis sie verschwindet und nur noch die Primärwelle übrigbleibt.

In vorteilhafter Ausgestaltung der Erfindung weist der Verdickungsbereich eine Mehrzahl von Mischmitteln, insbesondere Rippen, auf. Die Mischmittel verbessern die Durchmischung des organischen Materials in der Primäreinheit. Abhängig von der Ausgestaltung der Mischmittel können diese auch zur Zerkleinerung des organischen Materials beitragen. Die Rippen können beispielsweise gerade verlaufen, d.h. entlang der Längsachse der Primärwelle, oder schneckenförmig um die Primärwelle.

In vorteilhafter Ausgestaltung der Erfindung umfassen die Mittel zum Zerkleinern und Entklumpen des Vorkomposts eine Sekundärwelle, wobei die Sekundärwelle mehrere Zonen mit unterschiedlichen Durchmessern aufweist und/oder die Sekundärwelle mehrere radiale Verlängerungen aufweist. Auf diese Weise kann die Sekundäreinheit einfach realisiert werden, um den Vorkompost zu zerkleinern und zu entklumpen. Die unterschiedlichen Durchmesser können beispielsweise ringförmig ausgeführt sein mit unterschiedlichen Ausdehnungen in axialer Richtung. So kann die Sekundärwelle beispielsweise mit einem Querschnitt in Wellenform oder Kammform ausgeführt sein. Die radialen Verlängerungen können beispielsweise als Vorsprünge mit einer Stabform oder einer Keulenform ausgeführt sein. Alternativ können die radialen Verlängerungen auch kegelförmig oder pyramidenförmig ausgeführt sein. Die radialen Verlängerungen können entlang der Längsachse und auch in Umfangsrichtung der Sekundärwelle beliebig angeordnet sein, wobei die radialen Verlängerungen auch beispielsweise in mehreren Ringen an der Sekundärwelle angeordnet sein können. Die radialen Verlängerungen erstrecken sich vorzugsweise senkrecht von der Sekundärwelle. Alternativ können sich die radialen Verlängerungen mit einem beliebigen Winkel von der Sekundärwelle erstrecken.

In vorteilhafter Ausgestaltung der Erfindung weist der Komposter eine gemeinsame Welle auf, wobei ein erster Teil der gemeinsamen Welle die Primärwelle bildet und ein zweiter Teil der gemeinsamen Welle die Sekundärwelle bildet. Durch die gemeinsame Welle weisen die Primärwelle und die Sekundärwelle immer die gleiche Drehgeschwindigkeit auf. Primärwelle und Sekundärwelle können unmittelbar aneinander anschließen. Prinzipiell können die Primärwelle und die Sekundärwelle entlang der gemeinsamen Welle beabstandet sein, d.h. die gemeinsame Welle umfasst einen weiteren Teil, der weder der Primärwelle noch der Sekundärwelle zuzuordnen ist.

In vorteilhafter Ausgestaltung der Erfindung sind die Primärwelle und die Sekundärwelle zwei einzelne Wellen sind und der Komposter umfasst einen Motor, der mit der Primärwelle und der Sekundärwelle gekoppelt ist, um die Primärwelle und die Sekundärwelle gleichzeitig zu drehen. Hier sind die Primärwelle und die Sekundärwelle also separate Wellen, die sich somit prinzipiell unabhängig voneinander drehen können. Der Komposter kann nicht nur einfach und kostengünstig hergestellt werden, indem beide Wellen von einem Motor angetrieben werden. Auch der Betrieb des Komposters mit nur einem Motor ist kostengünstig möglich. Die Primärwelle und die Sekundärwelle können auf unterschiedliche Wiese mit dem Motor gekoppelt sein. Beispielsweise kann der Motor die Primärwelle oder die Sekundärwelle unmittelbar antreiben, und die beiden Wellen sind über Kopplungsmittel miteinander gekoppelt. Alternativ kann die jeweils andere Welle auch mit dem Motor gekoppelt sein. Weiter alternativ können beide Wellen über Kopplungsmittel mit dem Motor gekoppelt sein. Die Kopplungsmittel können beispielsweise Getriebe, Riemen, Ketten, Zahnräder und/oder Kupplungen umfassen. Die Primärwelle und die Sekundärwelle sind vorzugsweise so mit dem Motor und/oder miteinander gekoppelt, dass sie im Betrieb unterschiedliche Rotationsgeschwindigkeiten aufweisen.

In vorteilhafter Ausgestaltung der Erfindung weist der Komposter ein gemeinsames Gehäuse auf, wobei ein erster Teil des gemeinsamen Gehäuses das Primärgehäuse bildet und ein zweiter Teil des gemeinsamen Gehäuses das Sekundärgehäuse bildet. Abhängig von der Ausgestaltung des Komposters können beispielsweise das Primärgehäuse und das Sekundärgehäuse zu dem gemeinsamen Gehäuse miteinander verbunden sein. Unabhängig davon können die Primäreinheit und die Sekundäreinheit unterteilt sein. Beispielsweise kann das gemeinsame Gehäuse eine Trennwand aufweisen, welche die Primäreinheit und die Sekundäreinheit trennt. Es wird typischerweise eine kompakte Bauform für den Komposter ermöglicht. Das gemeinsame Gehäuse kann gegenüber den einzelnen Gehäusen einfach und kostengünstig hergestellt werden.

In vorteilhafter Ausgestaltung der Erfindung umfasst der Komposter mindestens einen Trichter, der ausgeführt ist, das Einführen des organischen Materials in das Innere des Komposters, insbesondere in die Primäreinheit, zu erleichtern. Durch den Trichter kann das organische Material mit großen Werkzeugen zugeführt werden, wodurch die Verarbeitung erleichtert wird. Der Trichter kann beispielsweise einen runden oder einen rechteckigen Querschnitt aufweisen.

In vorteilhafter Ausgestaltung der Erfindung umfasst der Komposter Sauerstoffzufuhrmittel zum Zuführen von Luft in das Innere des Komposters, insbesondere zum Zuführen von Luft in das Innere der Primäreinheit. Die Sauerstoffzufuhr erfordert keine Zufuhr von reinem Sauerstoff, sondern betrifft vielmehr eine Zufuhr eines Gasgemisches, welches Sauerstoff enthält. Die Sauerstoffzufuhr wird also durch eine Zufuhr von einem Gasgemisch mit Sauerstoff, typischerweise Luft, erreicht. Die Sauerstoffzufuhrmittel können eine Pumpe und an dem Komposter angeordnete Düsen umfassen, die über Schläuche oder Rohrleitungen verbunden sind.

In vorteilhafter Ausgestaltung der Erfindung umfasst der Komposter Heizmittel zum Erhöhen der Temperatur im Inneren des Komposters, insbesondere zum Erhöhen der Temperatur im Inneren der Primäreinheit. Die Heizmittel können beispielsweise als elektrische Heizelemente oder als fluiddurchflossene Heizelemente ausgeführt sein, wobei das Fluid in an sich bekannter Weise solarthermisch, mittels Wärmepumpe oder durch eine Verbrennung von einem Energieträger, beispielsweise Gas oder Öl, erwärmt werden kann. Durch das Erhöhen der Temperatur kann einerseits eine Trocknung des organischen Materials bzw. des Vorkomposts bewirkt werden. Andererseits kann ein Wachstum von Mikroorganismen oder Kleinorganismen begünstigt werden, die zur Zersetzung des organischen Materials bzw. des Vorkomposts beitragen. Vorzugsweise können die Heizmittel mit Sauerstoffzufuhrmitteln kombiniert sein, so dass beispielsweise erhitzte Luft in den Komposter eingeleitet wird, um die Temperatur im Inneren des Komposters zu erhöhen und gleichzeitig Luft in das Innere des Komposters zuzuführen.

In vorteilhafter Ausgestaltung der Erfindung umfasst der Komposter Mittel zum Einführen eines karbonisierten Materials in die Primäreinheit, vorzugsweise zusammen mit dem in die Primäreinheit eingeführten organischen Material. Das karbonisierte Material kann beispielsweise übliche Kohle sein, beispielsweise Holzkohle. Das karbonisierte Material ist dabei typischerweise in einer geeigneten Weise zerkleinert oder pulverisiert. Die Zugabe von karbonisiertem Material kann den Prozess der Kompostierung des zugeführten organischen Materials verbessern. Beispielsweise kann über die Zugabe des karbonisierten Materials Feuchtigkeit von dem organischen Material aufgenommen werden. Vorzugsweise umfassen die Mittel zum Einführen des karbonisierten Materials in die Primäreinheit einen Vorratsbehälter und einen Fördermechanismus, beispielsweise mit einem Förderband oder einer Förderschnecke, um das karbonisierte Material in die Primäreinheit einzuführen. In einfacher Weise kann der Fördermechanismus das karbonisierte Material in eine Zufuhröffnung oder einen Einfülltrichter der Primäreinheit fördern.

In vorteilhafter Ausgestaltung der Erfindung umfasst der Komposter Mittel zur Verarbeitung des Komposts, insbesondere nach einer thermophilen Ruhephase, zur Trennung des Komposts in einen feinen und einen groben Teil und Mittel zur Wiedereinführung des groben Teils in die Primäreinheit. Die Mittel zur Verarbeitung des Komposts zur Trennung des Komposts in einen feinen und einen groben Teil können beispielsweise eine rotierbare Trommel aufweisen, in welcher der feine und der grobe Teil nach der Art einer Zentrifuge getrennt werden. Der feine und der grobe Teil kann zunächst in jeweiligen Behältern gesammelt werden, oder nur der feine Teil wird gesammelt, während der grobe Teil unmittelbar mit den Mittel zur Wiedereinführung in die Primäreinheit geführt wird. Die Mittel zur Wiedereinführung können eine Fördereinheit, beispielsweise mit einem Förderband oder einer Förderschnecke, umfassen, mit denen der grobe Teil entweder unmittelbar oder aus dem entsprechenden Behälter wieder in die Primäreinheit eingeführt wird. In einfacher Weise kann die Fördereinheit den groben Teil in eine Zufuhröffnung oder einen Einfülltrichter der Primäreinheit fördern. Die Kompostierung umfasst typischerweise mehrere Phasen mit unterschiedlichen biologischen und biochemischen Prozessen. In einer ersten Phase, die auch als mesophile Phase bezeichnet wird, werden zunächst leicht abbaubarer Substanzen umgesetzt, wobei der Kompost Temperaturen von ca. 40°C erreicht. Es schließt sich die thermophile Phase an, in welcher der Kompost Temperaturen von über 45° annimmt. Oft werden Temperaturen von 60°C bis 70°C erreicht, so dass Wildkrautsamen und Keime abgetötet werden. Das Zuführen des groben Teils nach der thermophilen Phase kann also die Herstellung des Kompostes beschleunigen, da nur der grobe Teil weiterverarbeitet wird. Auch kann die Funktion des Komposters verbessert werden, wenn mit dem zugeführten groben Teil die Temperatur in dem Komposter erhöht werden kann, ohne dass externe Energie zugeführt werden muss.

In vorteilhafter Ausgestaltung der Erfindung umfasst der Komposter einen Kompostbehälter zur Aufnahme des Kompostes nach Verlassen der Sekundäreinheit, vorzugsweise mit einem Wiegesystem zum Wiegen des im Kompostbehälter aufgenommenen Kompostes. Der Kompostbehälter nimmt den Kompost auf und sammelt ihn, so dass der Kompost nach Beendigung des Prozesses aus der Sekundäreinheit abgelassen werden kann. Beispielsweise kann der Kompost kontinuierlich nach der Herstellung aus der Sekundäreinheit abgelassen werden. Durch das Wiegen kann einerseits das Herstellungsverfahren des Kompostes innerhalb des Komposters überwacht werden. Andererseits kann beispielsweise beim Überschreiten eines vorgegebenen Gewichts, d.h. wenn der Kompostbehälter voll ist, ein Austausch des Kompostbehälters ausgelöst werden.

In vorteilhafter Ausgestaltung der Erfindung weist der Komposter wenigstens eine Öffnung auf, die derart ausgebildet ist, dass Flüssigkeit, die das zur Umwandlung in Kompost erhaltene organische Material enthalten kann, nach außen ausgestoßen wird, wobei vorzugsweise der Komposter mindestens eine im Primärgehäuse und/oder im Sekundärgehäuse ausgebildete Öffnung aufweist und/oder der Komposter mindestens eine Öffnung aufweist, die zwischen der Primärwelle und dem Primärgehäuse ausgebildet ist, und/oder der Komposter mindestens eine Öffnung aufweist, die zwischen der Sekundärwelle und dem Sekundärgehäuse ausgebildet ist. Die wenigstens eine Öffnung ermöglicht das Ausstoßen von Flüssigkeit aus dem Komposters. Das Ausstoßen der Flüssigkeit kann basierend auf Schwerkraft oder einer Pumpe erfolgen. Auch kann durch das Komprimieren des organischen Materials die Flüssigkeit an einer geeigneten Stelle austreten lassen, so dass sie durch die wenigstens eine Öffnung ausgestoßen werden kann. Zusätzlich kann der Komposter Leiteinrichtungen aufweisen, um die durch die wenigstens eine Öffnung ausgestoßene Flüssigkeit zu einem Tank, Behälter oder ähnlichem zu transportieren. Zusätzlich können in dem Komposter, beispielsweise innenseitig am dem Primärgehäuse oder dem Sekundärgehäuse, Kanäle oder Rohre ausgebildet sein, um die Flüssigkeit zu der wenigstens einen Öffnung zu leiten.

Prinzipiell ist es möglich, den Komposter mit festen Einstellungen zu betreiben, indem beispielsweise die Primär- und die Sekundäreinheit kontinuierlich und gleichmäßig betrieben werden. Dadurch kann der hergestellte Kompost in seiner Qualität variieren, beispielsweise abhängig von der Art des zugeführten organischen Materials, einer Feuchtigkeit des zugeführten organischen Materials und/oder Umgebungsparametern wie einer Umgebungstemperatur im Bereich des Komposters. Um die Herstellung von Kompost mit einer gleichmäßigen Qualität zu erleichtern kann daher eine elektrische Steuerung des Komposters vorteilhaft sein. In vorteilhafter Ausgestaltung der Erfindung weist daher der Komposter mindestens einen Sensor zur Erfassung wenigstens eines für die Umwandlung des organischen Materials in den Kompost indikativen Parameters auf, insbesondere einer Temperatur oder einer Feuchtigkeit des aufgenommenen organischen Materials, des Vorkomposts und/oder des Komposts, einer Menge des in der Primäreinheit aufgenommenen organischen Materials, des Vorkomposts in der Sekundäreinheit und/oder des aus der Sekundäreinheit herausgekommenen Komposts, und der Komposter weist eine Steuereinheit auf zum Steuern und/oder Anpassen der Verarbeitung des Komposters basierend auf dem wenigstens einen erfassten Parameter durch Steuern des Abstands zwischen dem Bereich mit der Schneckenschraube und dem Verdickungsbereich entlang der Hauptwelle, der Geschwindigkeit der Primärwelle, der Geschwindigkeit der Sekundärwelle, der Luftzufuhr in den Komposter, insbesondere zur Zufuhr von Luft in das Innere der Primäreinheit, der Erhöhung der Temperatur im Inneren des Komposters, insbesondere der Erhöhung der Temperatur im Inneren der Primäreinheit, der Menge des in die Primäreinheit eingeführten karbonisierten Materials, und/oder der Verarbeitung des Komposts, insbesondere nach einer thermophilen Ruhephase, zur Trennung des Komposts in einen feinen Teil und einen groben Teil und insbesondere zur Wiedereinführung des groben Teils in die Primäreinheit. Basierend auf dem wenigstens einen Parameter kann somit der Betrieb des Komposters auf verschiedenen Arten allein oder in Kombination angepasst werden. Dadurch kann beispielsweise in der Primäreinheit dem zugeführten organischen Material mehr oder weniger Feuchtigkeit entzogen werden und/oder das organische Material mehr oder weniger lange behandelt werden, um Parameter des Vorkomposts zu verändern. In der Sekundäreinheit kann die Umwandlung es Vorkomposts in den Kompost gesteuert werden, indem der Vorkompost mehr oder weniger stark zerkleinert und entklumpt wird. Durch die Steuerung der Sauerstoffzufuhr und/oder der Temperatur können biologische Prozesse zur Umwandlung des Vorkomposts in Kompost beschleunigt oder verlangsamt werden. Auch kann der Betrieb beispielsweise an das Vorhandensein des organischen Materials angepasst werden, so dass bei einer geringen Auslastung der Betrieb des Komposters angepasst wird, beispielsweise um besonders wenig Energie zu verbrauchen. Insgesamt kann durch die Steuerung der Kompost mit einer gleichmäßigen Qualität hergestellt werden.

Die vorstehend verwendeten Begriffe Primäreinheit, Primärwelle und Primärgehäuse einerseits sowie Sekundäreinheit, Sekundärwelle und Sekundärgehäuse andererseits dienen der Zuordnung der Komponenten innerhalb des Komposters. Die Zusätze "primär" und "sekundär" wurden dabei anhand der Transportrichtung in dem Komposter gewählt, d.h. von dem Aufnehmen des organischen Materials in der Primäreinheit zu der Bereitstellung des Komposts am Ende der Sekundäreinheit. Eine Priorisierung oder Wertung für die Herstellung des Kompostes ist mit der Verwendung der Zusätze "primär" und "sekundär" ausdrücklich nicht verbunden.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Merkmale wie auch Vorteile des beschriebenen Verfahrens lassen sich ohne Weiteres auf den beschriebenen Komposter übertragen und umgekehrt. Auch können einzelne Schritte des Verfahrens in einer an sich beliebigen Reihenfolge durchgeführt werden. Das Verfahren ist nicht auf die beispielhaft beschriebene Abfolge der Verfahrensschritte beschränkt, wie sich für den Fachmann offensichtlich aus der Beschreibung ergibt. In Bezug auf die Ausgestaltung des Komposters ergeben sich für den Fachmann offensichtlich entsprechende Verfahrensschritte zur Weiterbildung des Verfahrens.

Es zeigt
- Fig. 1: eine schematische Ansicht eines Komposters mit einer Primäreinheit und einer Sekundäreinheit, die eine separate Primärwelle und Sekundärwelle aufweisen, gemäß einer ersten Ausführungsform,
- Fig. 2: eine Schnittansicht durch den Komposter aus Fig. 1 in Längsrichtung,
- Fig. 3: eine schematische Ansicht eines Komposters mit einer Primäreinheit und einer Sekundäreinheit, deren Primärwelle und Sekundärwelle eine gemeinsame Welle bilden, gemäß einer zweiten Ausführungsform,
- Fig. 4: eine Schnittansicht in Längsrichtung durch den Komposter aus Fig. 3 entlang einer Schnittkante A-A',
- Fig. 5: eine Detailansicht der Sekundäreinheit des Komposters aus Fig. 3 als Schnittansicht in Längsrichtung,
- Fig. 6: eine schematische Ansicht eines Komposters mit einer Primäreinheit und einer Sekundäreinheit, deren Primärwelle und Sekundärwelle eine gemeinsame Welle bilden, und Mitteln zum Einführen eines karbonisierten Materials in die Primäreinheit gemäß einer dritten Ausführungsform, und
- Fig. 7: eine schematische Ansicht eines Komposters mit einer Primäreinheit und einer Sekundäreinheit, deren Primärwelle und Sekundärwelle eine gemeinsame Welle bilden, Mitteln zum Einführen eines karbonisierten Materials in die Primäreinheit und Mitteln zur Verarbeitung des Komposts zur Trennung des Komposts in einen feinen und einen groben Teil und Mitteln zur Wiedereinführung des groben Teils in die Primäreinheit gemäß einer vierten Ausführungsform.

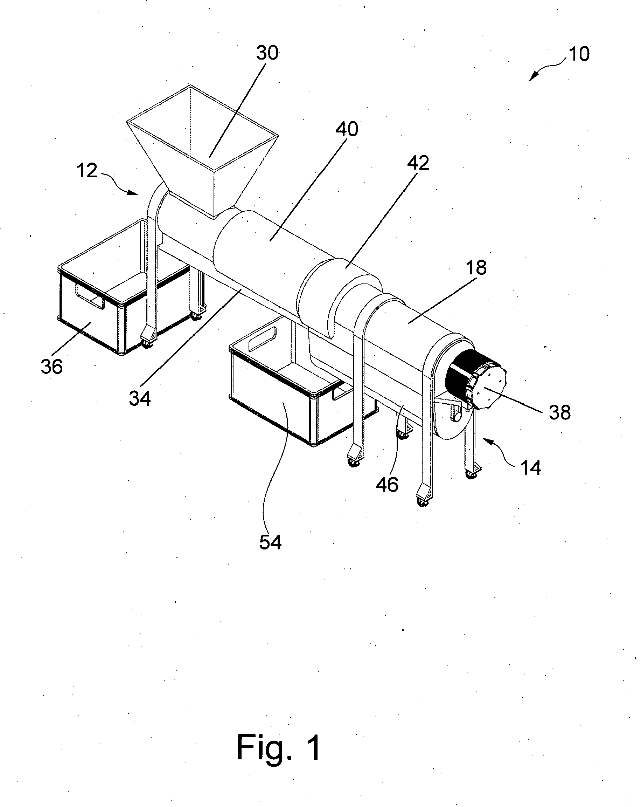

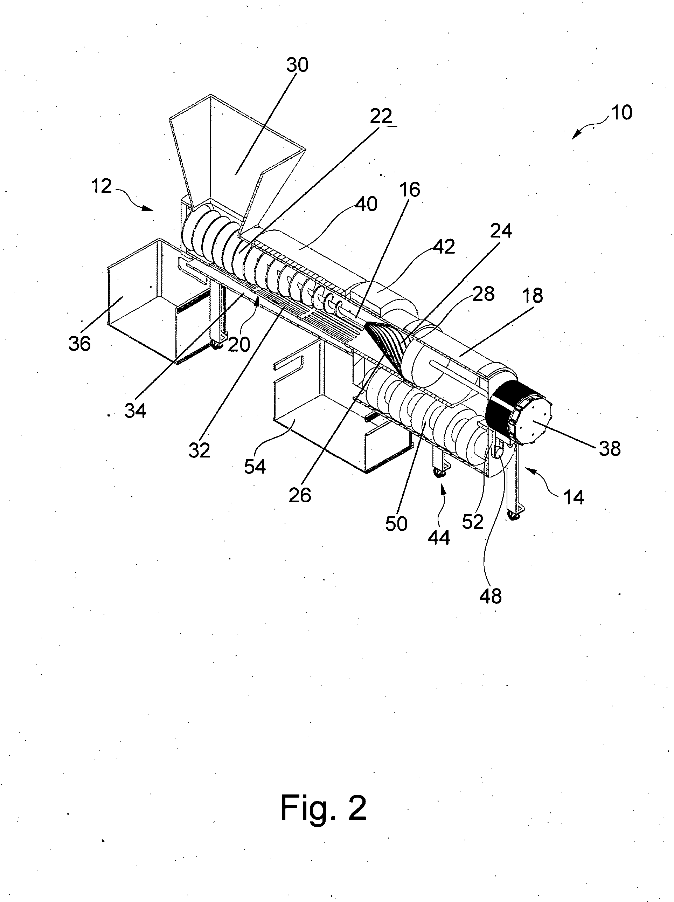

Die Figuren 1 und 2 zeigen einen Komposter 10 zur Umwandlung von organischem Material in Kompost gemäß einer ersten Ausführungsform.

Der Komposter 10 umfasst eine Primäreinheit 12, die das organische Material aufnimmt und komprimiert und den Druck des organischen Materials erhöht, um es in Vorkompost umzuwandeln, und eine Sekundäreinheit 14, die den Vorkompost von der Primäreinheit 12 erhält und den Vorkompost zerkleinert und entklumpt.

Die Primäreinheit 12 umfasst eine Primärwelle 16, die innerhalb eines Primärgehäuses 18 angeordnet ist. Die Primärwelle 16 umfasst wiederum einen Bereich 20 mit einer Schneckenschraube 22, wobei sich die Spirale der Schneckenschraube 22 zu einem ihrer Enden hin in ihrer radialen Länge verkürzt, und einen Verdickungsbereich 24, in dem der Durchmesser der Primärwelle 16 in Richtung des Innendurchmessers des Primärgehäuses 18 zunimmt. Der Bereich 20 mit der Schneckenschraube 22 und der Verdickungsbereich 24 sind hier als zwei getrennte Bereiche 20, 24 entlang der Primärwelle 16 ausgeführt. Optional ist ein Abstand zwischen dem Bereich 20 mit der Schneckenschraube 22 und dem Verdickungsbereich 24 entlang der Primärwelle 16 einstellbar.

Wie im Detail in Figur 2 zu erkennen ist, verkürzt sich die Spirale der Schneckenschraube 22 zu einem ihrer Enden hin in ihrer radialen Länge graduell. Außerdem verkürzt sich die Spirale der Schneckenschraube 22 zu diesem Ende hin in ihrer radialen Länge, bis sie verschwindet und nur noch die Primärwelle 16 übrigbleibt.

Der Verdickungsbereich 24 ist in diesem Ausführungsbeispiel als konisch zulaufender Bereich, d.h. als Kegel oder Kegelstumpf, ausgeführt. Der Verdickungsbereich 24 weist dabei eine Mehrzahl von Mischmitteln 26 auf, die hier als Rippen 26 ausgeführt sind. Die Rippen 26 verlaufen in diesem Ausführungsbeispiel schneckenförmig um die Primärwelle 16.

Am Ende des Verdickungsbereichs 24 weist dieser seine größte radiale Ausdehnung auf, wobei zwischen dem Verdickungsbereich 24 an der Stelle seiner größten radialen Ausdehnung und dem Primärgehäuse 18 ein Spalt 28 verbleibt, durch den Vorkompost aus der Primäreinheit 12 austreten kann. Das Ende des Verdickungsbereichs 24 definiert eine Auslassseite der Primäreinheit 12.

An ihrer Einlassseite nimmt die Primäreinheit 12 das organische Material durch einen Trichter 30 auf. Das organische Material tritt in die Primäreinheit 12 im Bereich mit der Schneckenschraube 22 ein wird durch die Primäreinheit 12 entlang der Primärwelle 16 gefördert. Während des Transports wird das organische Material komprimiert und dadurch der Druck des organischen Materials erhöht, so dass beispielsweise enthaltenen Feuchtigkeit austreten kann. Dazu sind in dem Primärgehäuse 18 Öffnungen 32 in der Form von Längsschlitzen 32 ausgebildet, durch welche die Feuchtigkeit in eine Leiteinrichtung 34 in der Form einer Ablaufrinne 34 gelangt und in einen Auffangbehälter 36 geleitet wird.

Ein Motor 38 ist auf der Primärwelle 16 angeordnet und versetzt diese in Rotation. Die Rotation der Primärwelle 16 bewirkt somit die Rotation der Schneckenschraube 22 und des Verdickungsbereichs 24 und damit den Transport des organischen Materials und dessen Umwandlung in den Vorkompost. Das Verkürzen der radialen Länge der Spirale der Schneckenschraube 22 tritt wie gezeigt von der Einlassseite der Primäreinheit 12 in Richtung zu der Auslassseite auf.

Um die Herstellung des Vorkomposts zu verbessern, umfasst der Komposter 10 Heizmittel 40 zum Erhöhen der Temperatur im Inneren des Komposters 10. In diesem Ausführungsbeispiel sind die Heizmittel 40 außenseitig am dem Primärgehäuse 18 angebracht, um die Temperatur in der Primäreinheit 12 zu erhöhen. Die Heizmittel 40 sind hier als elektrische Heizelemente bzw. Heizplatten mit einer an das Primärgehäuse 18 angepassten Bogenform ausgeführt.

Um die Herstellung des Vorkomposts weiter zu verbessern, umfasst der Komposter 10 Sauerstoffzufuhrmittel 42 zum Zuführen von Luft in das Innere des Komposters 12. In diesem Ausführungsbeispiel sind die Sauerstoffzufuhrmittel 42 an dem Primärgehäuse 18 angebracht, um die Luft in das Innere der Primäreinheit 12 zuzuführen. Dazu sind Sauerstoffzufuhrmittel 42 mit Luftdüsen oder Luftlöchern ausgeführt, um zugeführte Luft in das Innere der Primäreinheit 12 zuzuführen. Eine Pumpe zur Zufuhr der Luft ist in den Figuren nicht dargestellt.

Die Sekundäreinheit 14 ist in diesem Ausführungsbeispiel unterhalb der Primäreinheit 12 angeordnet. Sie erhält den Vorkompost von der Primäreinheit 12 und zerkleinert und entklumpt ihn. Der Vorkompost kann hier am Ende der Primäreinheit 12 automatisch von der Sekundäreinheit 14 aufgenommen werden. Die Sekundäreinheit 14 umfasst Mittel 44 zum Zerkleinern und Entklumpen des Vorkomposts, um ihn in Kompost zu verwandeln. Die Mittel 44 zum Zerkleinern und Entklumpen des Vorkomposts sind innerhalb eines Sekundärgehäuses 46 angeordnet. Danach wird der Kompost von der Sekundäreinheit 14 endseitig ausgelassen.

In diesem Ausführungsbeispiel umfassen die Mittel 44 zum Zerkleinern und Entklumpen des Vorkomposts eine Sekundärwelle 48, die mehrere Zonen 50 mit unterschiedlichen Durchmessern aufweist. Die Zonen 50 mit den unterschiedlichen Durchmessern sind hier ringförmig ausgeführt und in axialer Richtung gleichmäßig beabstandet Es ergibt sich für die Sekundärwelle 48 ein Querschnitt in Kammform. Die Sekundärwelle 48 ist über einen Riemen 52 mit der Primärwelle 16 oder direkt mit dem Motor 38 gekoppelt, so dass der Motor 38 die Primärwelle 16 und die Sekundärwelle 48 gemeinsam antreibt. Endseitig wird der fertige Kompost aus der Sekundäreinheit 14 ausgelassen und in einem Kompostbehälter 54 gesammelt.

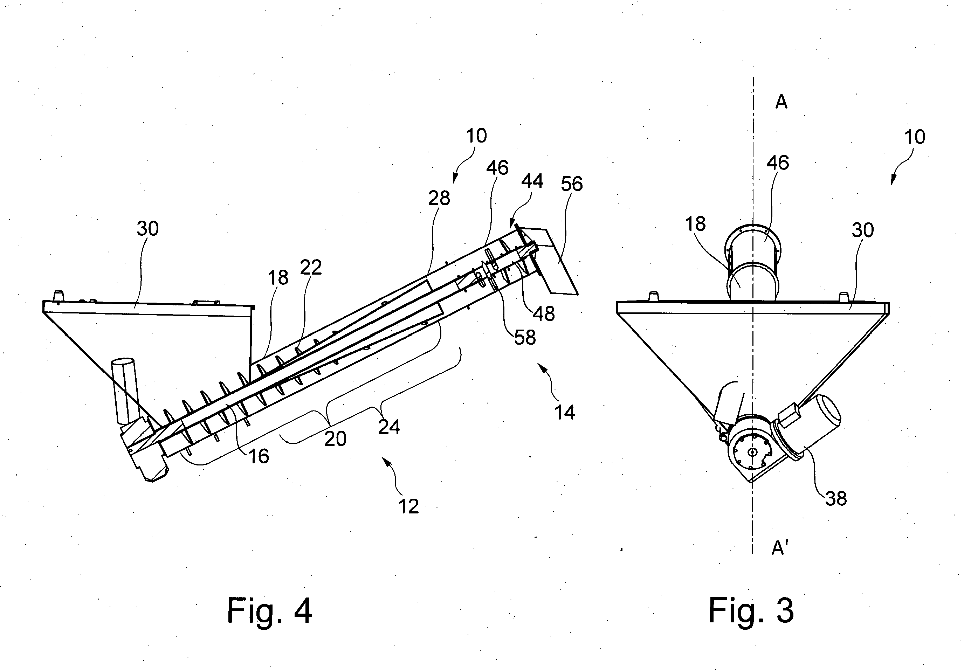

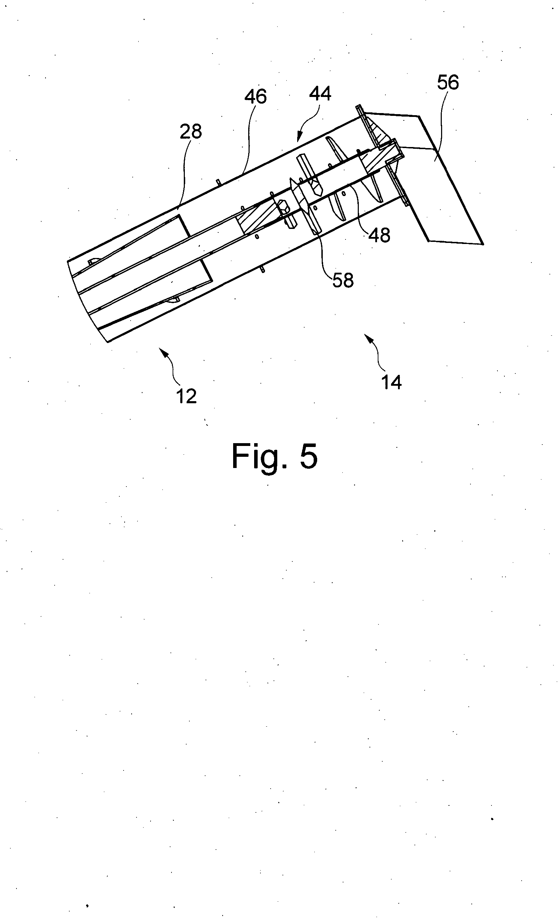

Die Figuren 3 bis 5 zeigen einen Komposter 10 zur Umwandlung von organischem Material in Kompost gemäß einer zweiten Ausführungsform. Der Komposter 10 der zweiten Ausführungsform basiert auf dem Komposter 10 der ersten Ausführungsform, so dass nachfolgend im Wesentlichen Unterschiede zwischen den beiden Kompostern 10 beschrieben werden. Für identische oder gleichartige Bauteile werden die gleichen Bezugszeichen verwendet.

Der Komposter 10 umfasst auch hier eine Primäreinheit 12, die das organische Material aufnimmt und komprimiert und den Druck des organischen Materials erhöht, um es in Vorkompost umzuwandeln, und eine Sekundäreinheit 14, die den Vorkompost von der Primäreinheit 12 erhält und den Vorkompost zerkleinert und entklumpt.

Die Primäreinheit 12 umfasst eine Primärwelle 16, die innerhalb eines Primärgehäuses 18 angeordnet ist. Die Primärwelle 16 umfasst wiederum einen Bereich 20 mit einer Schneckenschraube 22, wobei sich die Spirale der Schneckenschraube 22 zu einem ihrer Enden hin in ihrer radialen Länge verkürzt, und einen Verdickungsbereich 24, in dem der Durchmesser der Primärwelle 16 in Richtung des Innendurchmessers des Primärgehäuses 18 zunimmt. Der Bereich 20 mit der Schneckenschraube 22 und der Verdickungsbereich 24 sind hier teilweise überlappend entlang der Primärwelle 16 ausgeführt. Entsprechend umfasst der Bereich 20 mit der Schneckenschraube 22 teilweise den Verdickungsbereich,24 und der Verdickungsbereich 24 umfasst teilweise den Bereich 20 mit der Schneckenschraube 22.

Wie im Detail in Figur 4 zu erkennen ist, verkürzt sich die Spirale der Schneckenschraube 22 zu einem ihrer Enden hin in ihrer radialen Länge graduell. Außerdem verkürzt sich die Spirale der Schneckenschraube 22 zu diesem Ende hin in ihrer radialen Länge, bis sie verschwindet und nur noch die Primärwelle 16 übrigbleibt. Dies geht einher mit der Verdickung der Primärwelle 16 in dem Verdickungsbereich 24. Auch hier ist der Verdickungsbereich 24 als konisch zulaufender Bereich ausgeführt, der gegenüber dem ersten Ausführungsbeispiel jedoch keine zusätzlichen Mischmittel 26 aufweist. Das Verkürzen der radialen Länge der Spirale der Schneckenschraube 22 tritt wie gezeigt von der Einlassseite der Primäreinheit 12 in Richtung zu der Auslassseite auf.

Am Ende des Verdickungsbereichs 24 weist dieser seine größte radiale Ausdehnung auf, wobei zwischen dem Verdickungsbereich 24 an der Stelle seiner größten radialen Ausdehnung und dem Primärgehäuse 18 ein Spalt 28 verbleibt, durch den der Vorkompost aus der Primäreinheit 12 austreten kann. Das Ende des Verdickungsbereichs 24 definiert eine Auslassseite der Primäreinheit 12.

Auch in dem zweiten Ausführungsbeispiel nimmt die Primäreinheit 12 das organische Material durch einen Trichter 30 auf. Das organische Material wird durch die Primäreinheit 12 entlang der Primärwelle 16 gefördert. Während des Transports wird das organische Material komprimiert und dadurch der Druck des organischen Materials erhöht, so dass beispielsweise enthaltenen Feuchtigkeit austreten kann. Dazu ist hier in einer nicht im Detail dargestellten Weise eine Öffnung zwischen dem Primärgehäuse 18 und der Primärwelle 16 ausgebildet, durch welche die Feuchtigkeit aus der Primäreinheit 12 austreten kann. Auch der Komposter 10 der zweiten Ausführungsform kann in Übereinstimmung mit dem Komposter 10 der ersten Ausführungsform eine Leiteinrichtung 34 in der Form einer Ablaufrinne 36 und einen Auffangbehälter 36 aufweisen.

Der Komposter 10 der zweiten Ausführungsform ist hier ohne Heizmittel 40 und ohne Sauerstoffzufuhrmittel 42 dargestellt. Die Heizmittel 40 und Sauerstoffzufuhrmittel 42 können jedoch in einer alternativen Ausführungsform ohne Weiteres und wie für den Komposters 10 der ersten Ausführungsform beschrieben hinzugefügt werden.

Ein Motor 38 ist an der Primärwelle 16 angeordnet und versetzt diese in Rotation. Die Rotation der Primärwelle 16 bewirkt somit die Rotation der Schneckenschraube 22 und des Verdickungsbereichs 24 und damit den Transport des organischen Materials und dessen Umwandlung in den Vorkompost.

Die Sekundäreinheit 14 ist in diesem Ausführungsbeispiel als Verlängerung der Primäreinheit 12 in deren axialer Richtung angeordnet. Sie erhält den Vorkompost von der Primäreinheit 12 und zerkleinert und entklumpt ihn. Der Vorkompost wird automatisch am Ende der Primäreinheit 12 in die Sekundäreinheit 14 gefördert. Die Sekundäreinheit 14 umfasst Mittel 44 zum Zerkleinern und Entklumpen des Vorkömposts, um ihn in Kompost zu verwandeln. Die Mittel 44 zum Zerkleinern und Entklumpen des Vorkomposts sind innerhalb eines Sekundärgehäuses 46 angeordnet. Danach wird der Kompost von der Sekundäreinheit 14 endseitig ausgelassen, wozu der Komposter in diesem Ausführungsbeispiel eine Auslassöffnung 56 aufweist.

In diesem Ausführungsbeispiel umfassen die Mittel 44 zum Zerkleinern und Entklumpen des Vorkomposts eine Sekundärwelle 48, die mehrere radiale Verlängerungen 58 aufweist. Die radialen Verlängerungen 58 sind in diesem Ausführungsbeispiel als Vorsprünge mit einer Stabform ausgeführt, die entlang der Längsachse und auch in Umfangsrichtung der Sekundärwelle 48 beliebig angeordnet sind. Die radialen Verlängerungen 58 erstrecken sich hier senkrecht von der Sekundärwelle 48. Endseitig wird der fertige Kompost aus der Auslassöffnung 56 der Sekundäreinheit 14 ausgelassen und in einem in den Figuren 3 bis 5 nicht dargestellten Kompostbehälter 54 gesammelt.

In diesem Ausführungsbeispiel sind die Primärwelle 16 und die Sekundärwelle 48 als gemeinsame Welle 16, 48 ausgeführt, wobei ein erster Teil der gemeinsamen Welle 16, 48 die Primärwelle 16 bildet und ein zweiter Teil der gemeinsamen Welle 16, 48 die Sekundärwelle 48 bildet. Somit weisen die Primärwelle 16 und die Sekundärwelle 48 immer die gleiche Drehgeschwindigkeit auf.

Auch sind das Primärgehäuse 18 und das Sekundärgehäuse 46 als gemeinsames Gehäuse 18, 46 ausgeführt, wobei ein erster Teil des gemeinsamen Gehäuses 18, 46 das Primärgehäuse 18 bildet und ein zweiter Teil des gemeinsamen Gehäuses 18, 46 das Sekundärgehäuse 46 bildet.

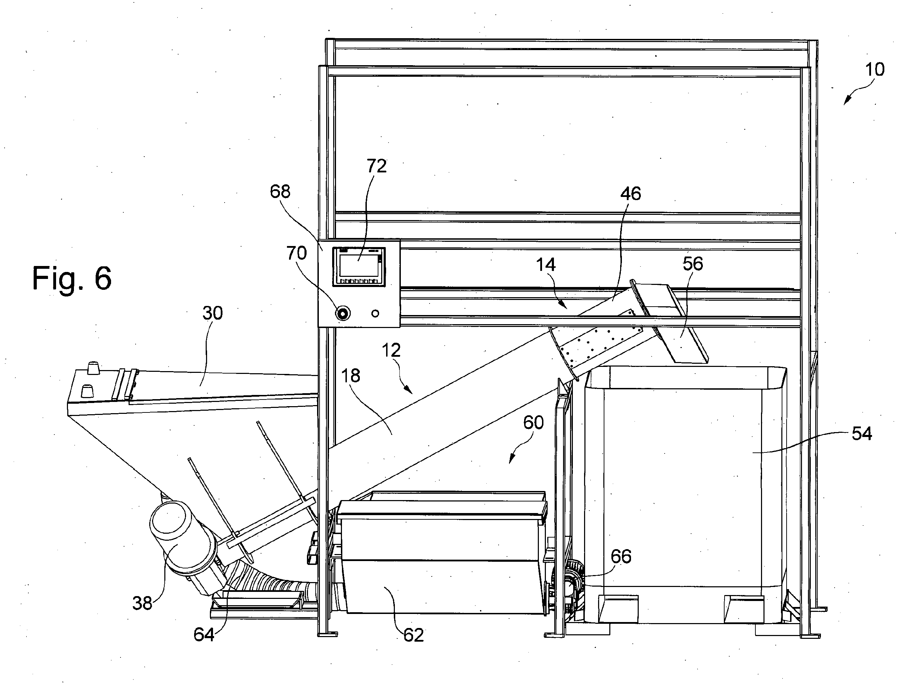

Figur 6 zeigt einen Komposter 10 zur Umwandlung von organischem Material in Kompost gemäß einer dritten Ausführungsform. Der Komposter 10 der dritten Ausführungsform umfasst den Komposter 10 der zweiten Ausführungsform, so dass nachfolgend im Wesentlichen Unterschiede zwischen den beiden Kompostern 10 beschrieben werden. Für identische oder gleichartige Bauteile werden die gleichen Bezugszeichen verwendet.

Der Komposter 10 umfasst auch hier eine Primäreinheit 12, die das organische Material aufnimmt und komprimiert und den Druck des organischen Materials erhöht, um es in Vorkompost umzuwandeln, und eine Sekundäreinheit 14, die den Vorkompost von der Primäreinheit 12 erhält und den Vorkompost zerkleinert und entklumpt. Die Details der Primäreinheit 12 und der Sekundäreinheit 14 entsprechen denen des Komposters 10 der zweiten Ausführungsform.

Zusätzlich zu dem Komposter 10 der zweiten Ausführungsform umfasst der Komposter 10 der dritten Ausführungsform Mittel 60 zum Einführen eines karbonisierten Materials in die Primäreinheit 12. Die Mittel 60 zum Einführen eines karbonisierten Materials in die Primäreinheit 12 umfassen einen Kohlebehälter 62, in dem hier Kohle in Pulverform als karbonisiertes Material bevorratet ist, und ein Kohlezuführrohr 64, durch welches die Kohle in Pulverform mit einem Gebläse 66 in den Trichter 30 gefördert wird. Damit kann das karbonisierte Material zusammen mit dem organischen Material in die Primäreinheit 12 eingeführt werden.

In diesem Ausführungsbeispiel umfasst der Komposter 10 mindestens einen Sensor zur Erfassung wenigstens eines für die Umwandlung des organischen Materials in den Kompost indikativen Parameters, insbesondere einer Temperatur oder einer Feuchtigkeit des aufgenommenen organischen Materials, des Vorkomposts und/oder des Komposts, einer Menge des in der Primäreinheit 12 aufgenommenen organischen Materials, des Vorkomposts in der Sekundäreinheit 14 und/oder des aus der Sekundäreinheit 14 herausgekommenen Komposts. Die Sensoren sind als solche dem Fachmann bekannt und sind in den Figuren nicht separat dargestellt.

Außerdem weist der Komposter 10 eine Steuereinheit 68 auf zum Steuern und/oder Anpassen der Verarbeitung des Komposters 10 basierend auf dem wenigstens einen erfassten Parameter. Die Steuereinheit 68 ist in dieser Ausführungsform ausgeführt, die Geschwindigkeit der gemeinsamen Welle 16, 48, die Menge des mit Mitteln 60 zum Einführen eines karbonisierten Materials in die Primäreinheit 12 eingeführten karbonisierten Materials zu steuern. Die Steuereinheit 68 ist mit einem Nottaster 70 zur Abschaltung des Komposters 10 wie auch mit einer Anzeigevorrichtung 72 zur Anzeige von Informationen über den Betrieb des Komposters 10 ausgeführt.

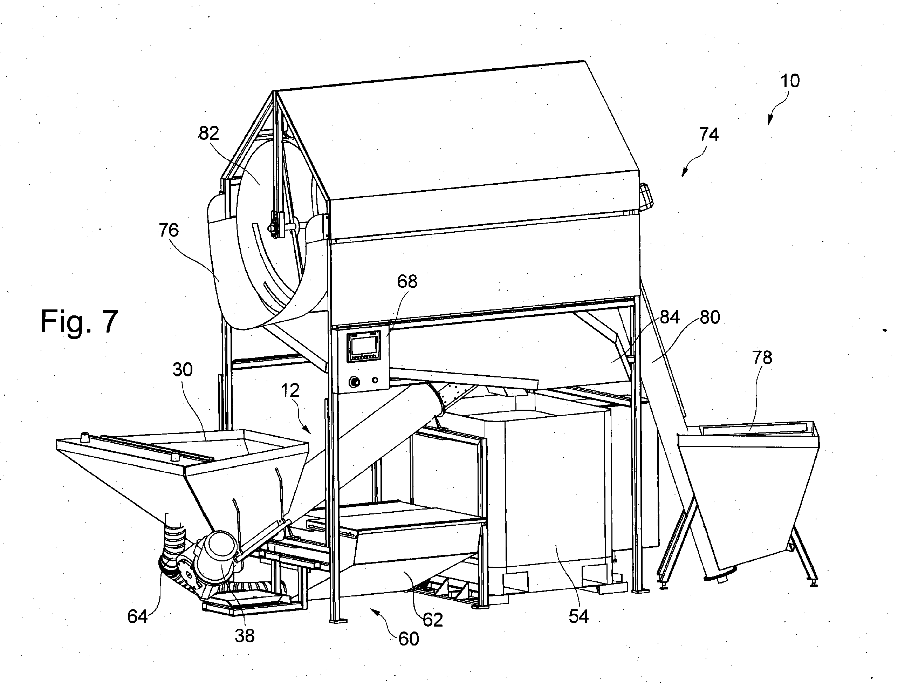

Figur 7 zeigt einen Komposter 10 zur Umwandlung von organischem Material in Kompost gemäß einer vierten Ausführungsform. Der Komposter 10 der vierten Ausführungsform umfasst den Komposter 10 der dritten Ausführungsform, so dass nachfolgend im Wesentlichen Unterschiede zwischen den beiden Kompostern 10 beschrieben werden. Für identische oder gleichartige Bauteile werden die gleichen Bezugszeichen verwendet.

Der Komposter 10 umfasst auch hier eine.Primäreinheit 12, die das organische Material aufnimmt und komprimiert und den Druck des organischen Materials erhöht, um es in Vorkompost umzuwandeln, und eine Sekundäreinheit 14, die den Vorkompost von der Primäreinheit 12 erhält und den Vorkompost zerkleinert und entklumpt. Die Details der Primäreinheit 12 und der Sekundäreinheit 14 entsprechen denen des Komposters 10 der dritten Ausführungsform.

Der Komposter 10 der vierten Ausführungsform umfasst ebenfalls Mittel 60 zum Einführen eines karbonisierten Materials in die Primäreinheit 12, wie zuvor für den Komposter 10 der dritten Ausführungsform beschrieben wurde.

Zusätzlich zu dem Komposter 10 der dritten Ausführungsform umfasst der Komposter 10 der vierten Ausführungsform Mittel 74 zur Verarbeitung des Komposts nach einer thermophilen Ruhephase zur Trennung des Komposts in einen feinen und einen groben Teil und Mittel 76 zur Wiedereinführung des groben Teils in die Primäreinheit 12. Wie in Figur 7 dargestellt ist, umfassen die Mittel 74 zur Verarbeitung des Komposts zur Trennung des Komposts einen Zufuhrbehälter 78, aus dem der Kompost mit einer Fördereinheit 80 in eine rotierbare Trommel 82 gefördert wird. In der rotierbaren Trommel 78 wird der Kompost nach der Art einer Zentrifuge in einen feinen und einen groben Teil getrennt. Der feine Teil des Komposts fällt über eine Rutsche 84 in einen in der Figur nicht dargestellten Sammelbehälter.

Der grobe Teil des Komposts wird über die Mittel 76 zur Wiedereinführung des groben Teils in die Primäreinheit 12, die hier als Schütte 76 ausgebildet sind, in den Trichter 30 geleitet und so der Primäreinheit 12 zugeführt.

Auch in diesem Ausführungsbeispiel umfasst der Komposter 10 mindestens einen Sensor zur Erfassung wenigstens eines für die Umwandlung des organischen Materials in den Kompost indikativen Parameters, insbesondere einer Temperatur oder einer Feuchtigkeit des aufgenommenen organischen Materials, des Vorkomposts und/oder des Komposts, einer Menge des in der Primäreinheit 12 aufgenommenen organischen Materials, des Vorkomposts in der Sekundäreinheit 14 und/oder des aus der Sekundäreinheit 14 herausgekommenen Komposts. Die Sensoren sind als solche dem Fachmann bekannt und sind in den Figuren nicht separat dargestellt.

Außerdem weist der Komposter 10 eine Steuereinheit 68 auf zum Steuern und/oder Anpassen der Verarbeitung des Komposters 10 basierend auf dem wenigstens einen erfassten Parameter. Die Steuereinheit 68 ist in dieser Ausführungsform ausgeführt, die Geschwindigkeit der gemeinsamen Welle 16, 48, die Menge des mit Mitteln 60 zum Einführen eines karbonisierten Materials in die Primäreinheit 12 eingeführten karbonisierten Materials, und die Verarbeitung des Komposts nach der thermophilen Ruhephase zur Trennung des Komposts in einen feinen Teil und einen groben Teil und zur Wiedereinführung des groben Teils in die Primäreinheit zu steuern.

### Bezugszeichenliste

- 10: Komposter
- 12: Primäreinheit
- 14: Sekundäreinheit
- 16: Primärwelle
- 18: Primärgehäuse
- 20: Bereich mit einer Schneckenschraube
- 22: Schneckenschraube
- 24: Verdickungsbereich
- 26: Mischmittel, Rippe
- 28: Spalt
- 30: Trichter
- 32: Öffnung
- 34: Leiteinrichtung, Ablaufrinne
- 36: Auffangbehälter .
- 38: Motor
- 40: Heizmittel
- 42: Sauerstoffzufuhrmittel
- 44: Mittel zum Zerkleinern und Entklumpen
- 46: Sekundärgehäuse
- 48: Sekundärwelle
- 50: Zone
- 52: Riemen
- 54: Kompostbehälter
- 56: Auslassöffnung
- 58: radiale Verlängerung, Vorsprung
- 60: Mittel zum Einführen eines karbonisierten Materials
- 62: Kohlebehälter
- 64: Kohlezuführrohr
- 66: Gebläse
- 68: Steuereinheit
- 70: Nottaster
- 72: Anzeigevorrichtung
- 74: Mittel zur Verarbeitung des Komposts zur Trennung des Komposts
- 76: Mittel zur Wiedereinführung des groben Teils, Schütte
- 78: Zufuhrbehälter
- 80: Fördereinheit
- 82: Trommel
- 84: Rutsche

## Patentansprüche

1. Komposter (10) zur Umwandlung von organischem Material in Kompost, umfassend
- eine Primäreinheit (12), die das organische Material aufnimmt und komprimiert und den Druck des organischen Materials erhöht, um es in Vorkompost umzuwandeln, mit
einer Primärwelle (16), die innerhalb eines Primärgehäuses (18) angeordnet ist, wobei die Primärwelle (16) wiederum einen Bereich (20) mit einer Schneckenschraube (22) umfasst, wobei sich die Spirale der Schneckenschraube (22) zu einem ihrer Enden hin in ihrer radialen Länge verkürzt, und einem Verdickungsbereich (24), in dem der Durchmesser der Primärwelle (16) in Richtung des Innendurchmessers des Primärgehäuses (18) zunimmt, insbesondere als konisch zulaufender Bereich, und
- eine Sekundäreinheit (14), die den Vorkompost von der Primäreinheit (12) erhält und den Vorkompost zerkleinert und entklumpt,
umfassend Mittel (44) zum Zerkleinern und Entklumpen des Vorkomposts, um ihn in Kompost zu verwandeln, die innerhalb eines Sekundärgehäuses (46) angeordnet sind.

2. Komposter (10) nach Anspruch 1, **dadurch gekennzeichnet, dass**
der Bereich (20) mit der Schneckenschraube (22) und der Verdickungsbereich (24) zwei getrennte Bereiche (20, 24) entlang der Primärwelle (16) bilden, oder
der Bereich (20) mit der Schneckenschraube (22) zumindest teilweise den Verdickungsbereich (24) umfasst, oder
der Verdickungsbereich (24) zumindest teilweise den Bereich (20) mit der Schneckenschraube (22) umfasst.

3. Komposter (10) nach einem der vorhergehenden Ansprüche, **dadurch gekennzeichnet, dass**
der Bereich (20) mit der Schneckenschraube (22) und der Verdickungsbereich (24) zwei getrennte Bereiche (20, 24) entlang der Primärwelle (16) bilden, und ein Abstand zwischen dem Bereich (20) mit der Schneckenschraube (22) und dem Verdickungsbereich (24) entlang der Primärwelle (16) einstellbar ist.

4. Komposter (10) nach einem der vorhergehenden Ansprüche, **dadurch gekennzeichnet, dass**
sich die Spirale der Schneckenschraube (22) zu einem ihrer Enden hin in ihrer radialen Länge graduell verkürzt, und/oder
sich die Spirale der Schneckenschraube (22) zu einem ihrer Enden hin in ihrer radialen Länge verkürzt, bis sie verschwindet und nur noch die Primärwelle (16) übrigbleibt.

5. Komposter (10) nach einem der vorhergehenden Ansprüche, **dadurch gekennzeichnet, dass**
der Verdickungsbereich (24) eine Mehrzahl von Mischmitteln (26), insbesondere Rippen (26), aufweist.

6. Komposter (10) nach einem der vorhergehenden Ansprüche, **dadurch gekennzeichnet, dass**
die Mittel (44) zum Zerkleinern und Entklumpen des Vorkomposts eine Sekundärwelle (48) umfassen, wobei die Sekundärwelle (48) mehrere Zonen (50) mit unterschiedlichen Durchmessern aufweist und/oder die Sekundärwelle (48) mehrere radiale Verlängerungen (58) aufweist.

7. Komposter (10) nach dem vorhergehenden Anspruch 6, **dadurch gekennzeichnet, dass**
der Komposter (10) eine gemeinsame Welle (16, 48) aufweist, wobei ein erster Teil der gemeinsamen Welle (16, 48) die Primärwelle (16) bildet und ein zweiter Teil der gemeinsamen Welle (16, 48) die Sekundärwelle (48) bildet.

8. Komposter (10) nach einem der vorhergehenden Ansprüche, **dadurch gekennzeichnet, dass**
die Primärwelle (16) und die Sekundärwelle (48) zwei einzelne Wellen (16, 48) sind und der Komposter (10) einen Motor (38) umfasst, der mit der Primärwelle (16) und der Sekundärwelle (48) gekoppelt ist, um die Primärwelle (16) und die Sekundärwelle (48) gleichzeitig zu drehen.

9. Komposter (10) nach einem der vorhergehenden Ansprüche, **dadurch gekennzeichnet, dass**
der Komposter (10) Sauerstoffzufuhrmittel (42) zum Zuführen von Luft in das Innere des Komposters (10) umfasst, insbesondere zum Zuführen von Luft in das Innere der Primäreinheit (12).

10. Komposter (10) nach einem der vorhergehenden Ansprüche, **dadurch gekennzeichnet, dass**
der Komposter (10) Heizmittel (40) zum Erhöhen der Temperatur im Inneren des Komposters (10) umfasst, insbesondere zum Erhöhen der Temperatur im Inneren der Primäreinheit (12).

11. Komposter (10) nach einem der vorhergehenden Ansprüche, **dadurch gekennzeichnet, dass**
der Komposter (10) Mittel (60) zum Einführen eines karbonisierten Materials in die Primäreinheit (12) umfasst, vorzugsweise zusammen mit dem in die Primäreinheit (12) eingeführten organischen Material.

12. Komposter (10) nach einem der vorhergehenden Ansprüche, **dadurch gekennzeichnet, dass**
der Komposter (10) Mittel (74) zur Verarbeitung des Komposts, insbesondere nach einer thermophilen Ruhephase, zur Trennung des Komposts in einen feinen und einen groben Teil und Mittel (76) zur Wiedereinführung des groben Teils in die Primäreinheit (12) umfasst.

13. Komposter (10) nach einem der vorhergehenden Ansprüche, **dadurch gekennzeichnet, dass**
der Komposter (10) wenigstens eine Öffnung (32) aufweist, die so ausgebildet ist, dass Flüssigkeit, die das zur Umwandlung in Kompost erhaltene organische Material enthalten kann, nach außen ausgestoßen wird, wobei vorzugsweise
der Komposter (10) mindestens eine im Primärgehäuse (18) und/oder im Sekundärgehäuse (46) ausgebildete Öffnung (32) aufweist und/oder
der Komposter (10) mindestens eine Öffnung (32) aufweist, die zwischen der Primärwelle (16) und dem Primärgehäuse (18) ausgebildet ist, und/oder
der Komposter (10) mindestens eine Öffnung (32) aufweist, die zwischen der Sekundärwelle (48) und dem Sekundärgehäuse (46) ausgebildet ist.

14. . Komposter (10) nach einem der vorhergehenden Ansprüche, **dadurch gekennzeichnet, dass**
der Komposter (10) mindestens einen Sensor zur Erfassung wenigstens eines für die Umwandlung des organischen Materials in den Kompost indikativen Parameters aufweist, insbesondere
einer Temperatur oder einer Feuchtigkeit des aufgenommenen organischen Materials, des Vorkomposts und/oder des Komposts,
einer Menge des in der Primäreinheit (12) aufgenommenen organischen Materials, des Vorkomposts in der Sekundäreinheit (14) und/oder des aus der Sekundäreinheit (14) herausgekommenen Komposts,
und der Komposter (10) weist eine Steuereinheit (68) auf zum Steuern und/oder Anpassen der Verarbeitung des Komposters (10) basierend auf dem wenigstens einen erfassten Parameter durch Steuern
des Abstands zwischen dem Bereich (20) mit der Schneckenschraube (22) und dem Verdickungsbereich (24) entlang der Hauptwelle (16),
der Geschwindigkeit der Primärwelle (16),
der Geschwindigkeit der Sekundärwelle (48),
der Luftzufuhr in den Komposter (10), insbesondere zur Zufuhr von Luft in das Innere der Primäreinheit (12),
der Erhöhung der Temperatur im Inneren des Komposters (10), insbesondere der Erhöhung der Temperatur im Inneren der Primäreinheit (12),
der Menge des in die Primäreinheit (12) eingeführten karbonisierten Materials, und/oder
der Verarbeitung des Komposts, insbesondere nach einer thermophilen Ruhephase, zur Trennung des Komposts in einen feinen Teil und einen groben Teil und insbesondere zur Wiedereinführung des groben Teils in die Primäreinheit (12).

15. Verfahren zur Umwandlung von organischem Material in Kompost in einem Komposter (10), insbesondere mit einem Komposter (10) nach einem der vorhergehenden Ansprüche 1 bis 14, umfassend die Schritte
Aufnehmen des organischen Materials in einer Primäreinheit (12) des Komposters (10),
Komprimieren und Erhöhen des Drucks des organischen Materials in der Primäreinheit (12), um es in Vorkompost umzuwandeln, und
Zerkleinern und Entklumpen des Vorkomposts in einer Sekundäreinheit (14) des Komposters (10), die den Vorkompost von der Primäreinheit (12) erhält, um ihn in Kompost zu verwandeln.

## Claims

1. A composter (10) for converting organic material into compost, comprising
- a primary unit (12) for receiving and compressing the organic material and increasing the pressure of the organic material to convert it into pre-compost, having
a primary shaft (16) disposed within a primary housing (18), the primary shaft (16) in turn comprising a portion (20) having an auger screw (22), the spiral of the auger screw (22) tapers in radial length toward one of its ends, and a thickening portion (24) in which the diameter of the primary shaft (16) increases in the direction of the inner diameter of the primary housing (18), in particular as a conical portion, and
- a secondary unit (14) which receives the pre-compost from the primary unit (12) and shreds and breaks up the pre-compost,
comprising means (44) for shredding and breaking up the pre-compost in order to convert it into compost, which are arranged within a secondary housing (46).

2. Composter (10) according to claim 1, **characterized in that**
the portion (20) with the auger screw (22) and the thickening portion (24) form two separate portions (20, 24) along the primary shaft (16), or
the portion (20) with the auger screw (22) at least partially encompasses the thickening portion (24), or
the thickening portion (24) at least partially encompasses the portion (20) with the auger screw (22).

3. Composter (10) according to one of the preceding claims, **characterized in that**
the portion (20) with the auger screw (22) and the thickening portion (24) form two separate portions (20, 24) along the primary shaft (16), and a distance between the portion (20) with the auger screw (22) and the thickening portion (24) is adjustable along the primary shaft (16).

4. Composter (10) according to one of the preceding claims, **characterized in that**
the spiral of the auger screw (22) gradually shortens in its radial length towards one of its ends, and/or
the spiral of the auger screw (22) shortens in its radial length towards one of its ends until it disappears and only the primary shaft (16) remains.

5. Composter (10) according to one of the preceding claims, **characterized in that**
the thickening portion (24) has a plurality of mixing means (26), in particular ribs (26).

6. Composter (10) according to one of the preceding claims, **characterized in that**
the means (44) for shredding and breaking up the pre-compost comprise a secondary shaft (48), the secondary shaft (48) having several zones (50) with different diameters and/or the secondary shaft (48) having several radial extensions (58).

7. Composter (10) according to the preceding claim 6, **characterized in that**
the composter (10) has a common shaft (16, 48), a first part of the common shaft (16, 48) forming the primary shaft (16) and a second part of the common shaft (16, 48) forming the secondary shaft (48).

8. Composter (10) according to one of the preceding claims, **characterized in that**
the primary shaft (16) and the secondary shaft (48) are two individual shafts (16, 48) and the composter (10) comprises a motor (38) coupled to the primary shaft (16) and the secondary shaft (48) for simultaneously rotating the primary shaft (16) and the secondary shaft (48).

9. Composter (10) according to any preceding claim, **characterized in that**
the composter (10) comprises oxygenation means (42) for supplying air to the interior of the composter (10), in particular for supplying air to the interior of the primary unit (12).

10. Composter (10) according to one of the preceding claims, **characterized in that**
the composter (10) comprises heating means (40) for increasing the temperature inside the composter (10), in particular for increasing the temperature inside the primary unit (12).

11. Composter (10) according to any preceding claim, **characterized in that**
the composter (10) comprises means (60) for introducing carbonized material into the primary unit (12), preferably together with the organic material introduced into the primary unit (12).

12. Composter (10) according to any preceding claim, **characterized in that**
the composter (10) comprises means (74) for processing the compost, in particular after a thermophilic resting phase, for separating the compost into a fine and a coarse part, and means (76) for reintroducing the coarse part into the primary unit (12).

13. Composter (10) according to one of the preceding claims, **characterized in that**
the composter (10) comprises at least one opening (32) designed to expel to the outside liquid which may contain the organic material received for transformation into compost, wherein preferably
the composter (10) comprises at least one opening (32) formed in the primary housing (18) and/or in the secondary housing (46) and/or
the composter (10) has at least one opening (32) formed between the primary shaft (16) and the primary housing (18), and/or
the composter (10) has at least one opening (32) formed between the secondary shaft (48) and the secondary housing (46).

14. Composter (10) according to one of the preceding claims, **characterized in that**
the composter (10) comprises at least one sensor for detecting at least one parameter indicative of the conversion of the organic material into compost, in particular
a temperature or a humidity of the received organic material, of the pre-compost and/or of the compost,
a quantity of the organic material received in the primary unit (12), of the pre-compost in the secondary unit (14) and/or of the compost that has emerged from the secondary unit (14),
and the composter (10) has a control unit (68) for controlling and/or adapting the processing of the composter (10) based on the at least one detected parameter by controlling
the distance between the portion (20) with the auger screw (22) and the thickening portion (24) along the main shaft (16),
the speed of the primary shaft (16),
the speed of the secondary shaft (48),
the supply of air to the composter (10), in particular for supplying air to the interior of the primary unit (12),
the increase in temperature in the interior of the composter (10), in particular the increase in temperature in the interior of the primary unit (12),
the amount of carbonized material introduced into the primary unit (12), and/or
the processing of the compost, in particular after a thermophilic rest phase, for separating the compost into a fine part and a coarse part and in particular for reintroducing the coarse part into the primary unit (12).

15. A method for converting organic material into compost in a composter (10), in particular with a composter (10) according to one of the preceding claims 1 to 14, comprising the steps of
receiving the organic material in a primary unit (12) of the composter (10),
compressing and increasing the pressure of the organic material in the primary unit (12) to convert it into pre-compost, and
shredding and breaking up the pre-compost in a secondary unit (14) of the composter (10) which receives the pre-compost from the primary unit (12) to convert it into compost.

## Revendications

1. Composteur (10) pour la transformation de matière organique en compost, comprenant
- une unité primaire (12) qui reçoit et comprime la matière organique et augmente la pression de la matière organique pour la convertir en pré-compost, avec
un arbre primaire (16) disposé à l'intérieur d'un boîtier primaire (18), l'arbre primaire (16) comprenant à son tour une zone (20) avec une vis sans fin (22), la spirale de la vis sans fin (22) se raccourcissant en longueur radiale vers l'une de ses extrémités, et une zone d'épaississement (24) dans laquelle le diamètre de l'arbre primaire (16) augmente en direction du diamètre intérieur du boîtier primaire (18), en particulier sous forme d'une zone conique, et
- une unité secondaire (14) qui reçoit le pré-compost de l'unité primaire (12) et qui broie et dé-agglomère le pré-compost,
comprenant des moyens (44) pour broyer et désagglomérer le pré-compost afin de le transformer en compost, disposés à l'intérieur d'un boîtier secondaire (46).

2. Composteur (10) selon la revendication 1, **caractérisé en ce que**
la zone (20) avec la vis sans fin (22) et la zone d'épaississement (24) forment deux zones séparées (20, 24) le long de l'arbre primaire (16), ou
la zone (20) avec la vis sans fin (22) comprend au moins partiellement la zone d'épaississement (24), ou
la zone d'épaississement (24) comprend au moins partiellement la zone (20) avec la vis sans fin (22).

3. Composteur (10) selon l'une des revendications précédentes, **caractérisé en ce que**
la zone (20) avec la vis sans fin (22) et la zone d'épaississement (24) forment deux zones séparées (20, 24) le long de l'arbre primaire (16), et une distance entre la zone (20) avec la vis sans fin (22) et la zone d'épaississement (24) est réglable le long de l'arbre primaire (16).

4. Composteur (10) selon l'une quelconque des revendications précédentes, **caractérisé en ce que**
la spirale de la vis sans fin (22) se raccourcit progressivement en longueur radiale vers l'une de ses extrémités, et/ou
la spirale de la vis sans fin (22) se raccourcit en longueur radiale vers l'une de ses extrémités jusqu'à disparaître, ne laissant subsister que l'arbre primaire (16).

5. Composteur (10) selon l'une quelconque des revendications précédentes, **caractérisé en ce que**
la zone d'épaississement (24) comporte une pluralité de moyens de mélange (26), notamment des nervures (26).

6. Composteur (10) selon l'une quelconque des revendications précédentes, **caractérisé en ce que**
les moyens (44) moyens pour broyer et désagglomérer le pré-compost comprennent un arbre secondaire (48), l'arbre secondaire (48) comprenant plusieurs zones (50) de diamètres différents et/ou l'arbre secondaire (48) comprenant plusieurs extensions radiales (58).

7. Composteur (10) selon la revendication 6 précédente, **caractérisé en ce que**
le composteur (10) comprend un arbre commun (16, 48), une première partie de l'arbre commun (16, 48) formant l'arbre primaire (16) et une deuxième partie de l'arbre commun (16, 48) formant l'arbre secondaire (48).

8. Composteur (10) selon l'une quelconque des revendications précédentes, **caractérisé en ce que**
L'arbre primaire (16) et l'arbre secondaire (48) sont deux arbres distincts (16, 48) et le composteur (10) comprend un moteur (38) couplé à l'arbre primaire (16) et à l'arbre secondaire (48) pour faire tourner simultanément l'arbre primaire (16) et l'arbre secondaire (48).

9. Composteur (10) selon l'une quelconque des revendications précédentes, **caractérisé en ce que**
le composteur (10) comprend des moyens d'alimentation en oxygène (42) pour fournir de l'air à l'intérieur du composteur (10), notamment pour fournir de l'air à l'intérieur de l'unité primaire (12).

10. Composteur (10) selon l'une quelconque des revendications précédentes, **caractérisé en ce que**
le composteur (10) comprend des moyens de chauffage (40) pour augmenter la température à l'intérieur du composteur (10), notamment pour augmenter la température à l'intérieur de l'unité primaire (12).

11. Composteur (10) selon l'une quelconque des revendications précédentes, **caractérisé en ce que**
le composteur (10) comprend des moyens (60) pour introduire une matière carbonisée dans l'unité primaire (12), de préférence en même temps que la matière organique introduite dans l'unité primaire (12).

12. Composteur (10) selon l'une quelconque des revendications précédentes, **caractérisé en ce que**
le composteur (10) comprend des moyens (74) de traitement du compost, notamment après une phase de repos thermophile, pour séparer le compost en une partie fine et une partie grossière, et des moyens (76) de réintroduction de la partie grossière dans l'unité primaire (12).

13. Composteur (10) selon l'une quelconque des revendications précédentes, **caractérisé en ce que**
le composteur (10) comporte au moins une ouverture (32) configurée pour expulser vers l'extérieur le liquide susceptible de contenir la matière organique obtenue pour être transformée en compost, de préférence
le composteur (10) présente au moins une ouverture (32) formée dans le boîtier primaire (18) et/ou dans le boîtier secondaire (46) et/ou
le composteur (10) présente au moins une ouverture (32) qui est formée entre l'arbre primaire (16) et le boîtier primaire (18), et/ou
le composteur (10) présente au moins une ouverture (32) qui est formée entre l'arbre secondaire (48) et le boîtier secondaire (46).

14. Composteur (10) selon l'une quelconque des revendications précédentes, **caractérisé en ce que**
le composteur (10) comporte au moins un capteur pour détecter au moins un paramètre indicatif de la transformation de la matière organique en compost, notamment
d'une température ou d'une humidité de la matière organique ingérée, du pré-compost et/ou du compost,
d'une quantité de matière organique reçue dans l'unité primaire (12), de pré-compost dans l'unité secondaire (14) et/ou de compost issu de l'unité secondaire (14),
et le composteur (10) comprend une unité de commande (68) pour commander et/ou ajuster le traitement du composteur (10) sur la base du au moins un paramètre détecté en commandant
de la distance entre la zone (20) avec la vis sans fin (22) et la zone d'épaississement (24) le long de l'arbre principal (16),
la vitesse de l'arbre primaire (16),
de la vitesse de l'arbre secondaire (48),
de l'alimentation en air dans le composteur (10), en particulier pour l'alimentation en air à l'intérieur de l'unité primaire (12),
de l'augmentation de la température à l'intérieur du composteur (10), en particulier de l'augmentation de la température à l'intérieur de l'unité primaire (12),
de la quantité de matière carbonisée introduite dans l'unité primaire (12), et/ou
le traitement du compost, notamment après une phase de repos thermophile, pour séparer le compost en une partie fine et une partie grossière, et notamment pour réintroduire la partie grossière dans l'unité primaire (12).

15. Procédé de transformation de matière organique en compost dans un composteur (10), notamment avec un composteur (10) selon l'une quelconque des revendications 1 à 14 précédentes, comprenant les étapes consistant à
Réception de la matière organique dans une unité primaire (12) du composteur (10),
comprimer et augmenter la pression de la matière organique dans l'unité primaire (12) pour la transformer en pré-compost, et
broyer et désagglomérer le pré-compost dans une unité secondaire (14) du composteur (10) qui reçoit le pré-compost de l'unité primaire (12) pour le transformer en compost.
